# EUROPEAN PATENT APPLICATION

(11) **EP 2 628 712 A1**
(43) Date of publication of application: **21.08.2013**
(21) Application number: 12460041.2
(22) Date of filing: 09.07.2012
(51) Int. Cl.: C02F 3/30, B01D 21/00, C02F 3/12, C02F 3/22

(54) **Adiabatic, mechanical-biological sewage treatment plant**

(30) Priority: 20.02.2012 PL 39818112
(71) Applicant: Sapling sp. z o. o., 17 - 100 Bielsk Podlaski (PL)
(72) Inventor: Komorowski, Artur, 96 - 500 Sochaczew (PL)
(74) Representative: Dziubinska, Joanna

(57) **Abstract**

The invention relates to adiabatic, mechanical-biological sewage treatment plant, designed for urban sewage treatment.

Sewage treatment plant is created by the cylindrical tank of anaerobic reactor 1 with located in the middle the cylindrical tank of aerobic reactor 2. The aerobic reactor 2 is at the bottom of the anaerobic reactor 1. Sewage is inserted (usually influenced by gravity) into the initial zone 3 of the anaerobic reactor 1 through the input 4 and is initially broken on plate 5. In the zone 3 of the anaerobic reactor 1 there are mechanical treatment processes, mainly sedimentation and separation of solids on the rough grille 6. Next, sewage flow by gravity to the initially clarifying zone 3b of the reactor, separated from the other zones by the wall 7. In the wall 7 there are units of clarifying siphons 8 connected with air flotation units 9. Then sewage, thanks to placing the input in siphons 8 at a suitable height, flow from the zone 3b (initially clarified) by siphons 8 upwards to the level of separating ridges 10, which also stop rising suspension. After passing through the ridges 10 pollution run as cascade to the second zone 11 of the anaerobic reactor 1, which acts as a retention buffer (with a third zone 12) and adopts the impulse of discharge of sewage occurring for example during the day. In the zone 11 there is further clarification of the solution of sewage and its gravity flow into the third zone 12 through the siphons 13 located on the compartment 14, that divides the second zone 11 from the third zone 12 of the anaerobic reactor 1. From the third zone 12 almost completely clarified sewage is taken regularly by air lift 15 (a mammoth pump) to the aerobic reactor 2. Clarified sewage through the injection system is taken by the vertical main pipe 16 to the bottom part of the aerobic reactor 2, which acts as a settling tank and anoxic zone. At the end of dosing cycle sewage is led by a rotary pump 17 through the discharge pipe 18 to the top part of the aerobic reactor 2. There, by a system of horizontal pipes 19 sewage flows to cyclone sprinklers 20, while the pipe 19 can be fixed or rotary (depending on system size). On the pipes 19 before the cyclone sprinkler nozzles 20 are located injector nozzles 21, which at the time of the flow of the sewage in the inner pipe suck the air through circumferentially spaced holes in the outer pipe and also aerate the flowing load. So prepared emulsion of air and sewage drops in rotary motion on the deposit 22, made of plastic. The stream of sewage flowing to the deposit 22 is thoroughly broken thanks to the sprinkler system combining a cyclone and injector effect. The same sprinkler system provides increased surface of exchange phase liquid - gas, an even hydration of the surface of the deposit maintaining adequate hydraulic load and prevents build-up of nozzles with biological membrane. Under the biological deposit 22 is a secondary settling tank 23 and a pipe 24 leading treated sewage outside. The sludge from the secondary settling tank 23 is transported by a pipe 25 to the initial zone 3a. The deposit 22 is aerated mechanically by a spiral diffuser 26 located under the deposit 22.

## Description

The invention relates to adiabatic, mechanical-biological sewage treatment plant, designed for urban sewage treatment.

Known municipal sewage treatment plants consist of three or four degrees of purification. The first step, mechanical treatment are usually: grating, settling tanks, and various separators. From the mechanical treatment sewage are given to the reactors in which sewage treatment takes place by oxidation of organic compounds from sewage by microorganisms. From the aerobic reactor sewage is transported to the third degree of purification, which is the secondary settling tank. There is a process of final clarification of the liquid through the separation of suspensions. Sewage between steps are recirculated in accordance with the established technology. Treated sewage is disposed of to the receiver or, if necessary, targeted to the fourth degree of chemical treatment. The solid waste collected on the grating is removed mechanically from time to time. Subsequent chambers are placed one after the other and sewage flow from the first chamber to the next one in sequence and in the end flow for example into the river. From the description of the invention EP1612191 is known mechanical-biological treatment plant, with a compact design where the aerobic reactor tank was placed in the anaerobic reactor tank. In the invention mechanically treated sewage on the grating surround aerobic reactor chamber. This design was developed so that to connect the sewage treatment plant it is necessary only to create one connection at the input and one exit at the output.

In biological sewage treatment technologies one of the most important performance parameters of biological processes, both aerobic and anaerobic, is the temperature, in particular, its appropriate scope. The best technological results are obtained in the temperature range of 12-25 ° C. In the known biological sewage treatment, most biological processes cease at temperatures around 5 ° C. When the temperature is too high (> 30 ° C) even though it supports processes in the areas of anaerobic digesters at the same time it causes an increase of odors. In addition, the amount of dissolved oxygen in water decreases with increasing temperature, which has a substantial impact on the aerobic processes and the composition of biota required for sewage treatment.

According to the invention adiabatic, mechanical-biological sewage treatment plant has an anaerobic reactor chamber in the form of three-chamber settler, in which in the first part of the first zone, in the initial zone, are collected sewage treated mechanically on the grating and from the second part of the first zone, initially clarifying. The second treatment zone, which is a retention buffer, is separated from the initially clarifying part by the wall, in which there are units of clarifying siphons with flotation units. The third treatment zone is separated from the second zone by the compartment with overflow siphons to transport sewage from the retention buffer to the third zone. The third zone is preferably connected by an air-lift to the aerobic reactor, located inside the anaerobic reactor. In the aerobic reactor over the biological deposit there is a sprinkler, preferably cyclone, combined with injector nozzles, which are positioned on the pipelines supplying sewage to the sprinklers. Under the biological fluid is the secondary settling tank and discharge line taking the treated sewage outside. Flotation units are placed in the pipe of the clarifying siphon which is located in the clarifying zone of the anaerobic reactor.

In the chamber of the blower of technological air there is a blender mixing warm internal air with cold external air. Cold external air is brought into chamber of the blower by the internal pipe from external air intake and warm air from the aerobic reactor is brought into the chamber of the blower by the outer pipe, surrounding the internal pipe with cold air.

In the blender the pipes supplying warm and cold air have in the input the orifice regulators to adjust the ratio of hot and cold air.

In the blender there is a condenser to dry the air entering the chamber of the blower of technological air.

Sewage treatment plant according to the invention features a compact design and provides a continuous process of sewage treatment. Sewage treatment plant, by using the adiabatic effect, can work in all weather conditions, ensuring optimum temperature conditions inside the technological part. More advantages of the invention will be explained later while describing an exemplary embodiment of the plant.

The object of the invention is shown in the drawing, in which fig. 1 shows a visual view of the chambers of the reactor after removing the cover, fig. 2 shows the cross section of the treatment plant through the vertical axis, fig. 3 shows a section through a set of siphons with flotation units, and fig. 4a and 4b in two projections shows a view of the sprinkler unit with injector nozzles, while fig. 5 shows the blender mixing air in axonometric half cross-section and fig. 6 - the air circulation system in the axonometric view.

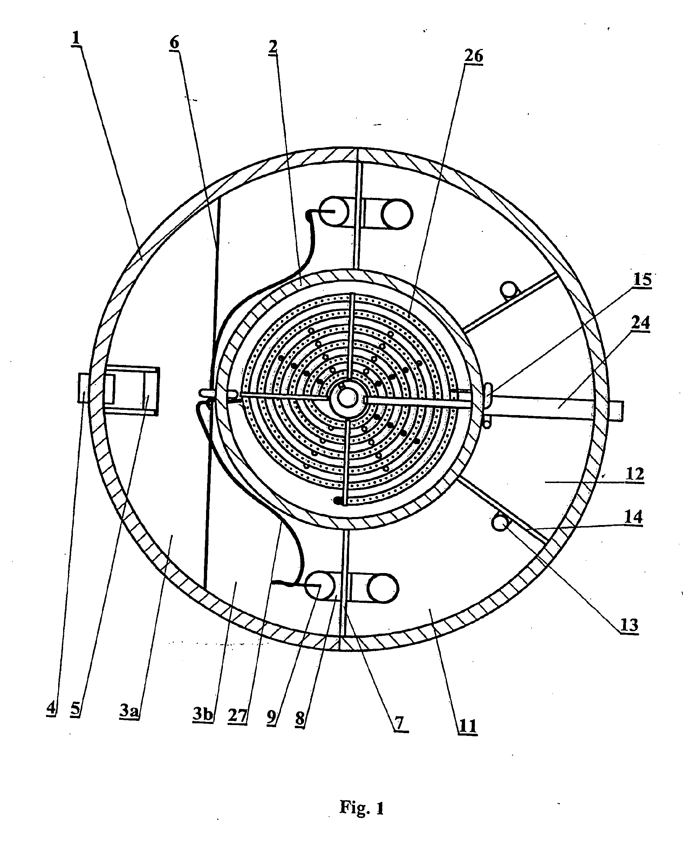

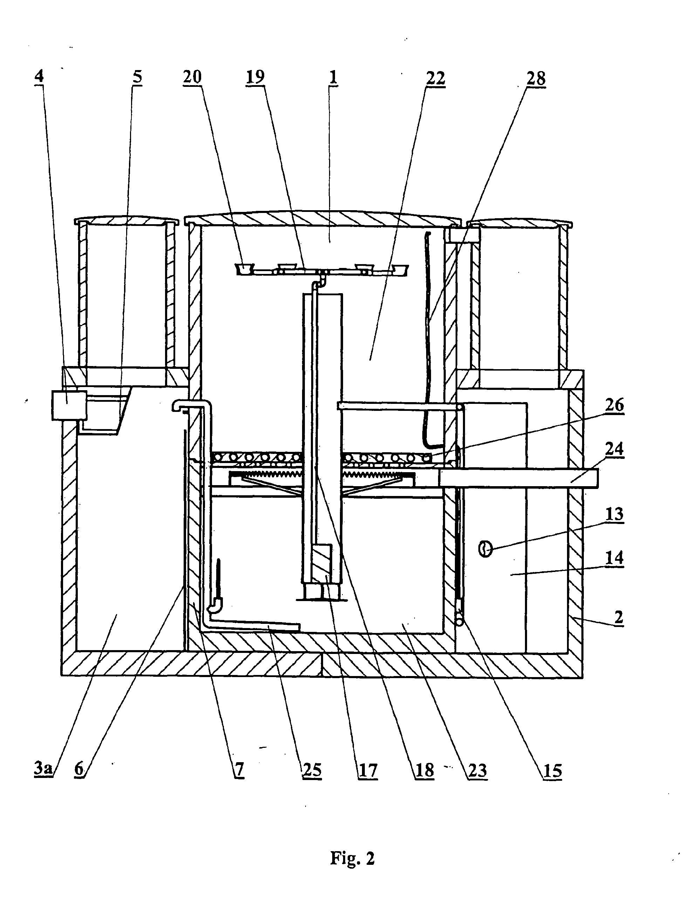

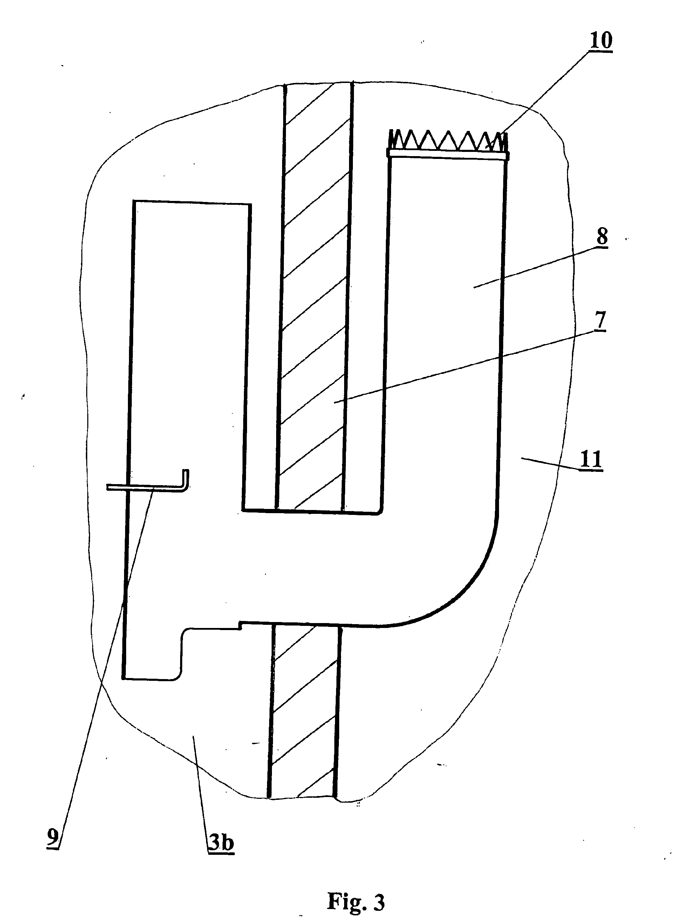

As shown in fig. 1 and fig. 2, sewage treatment plant is created by the cylindrical tank of anaerobic reactor 1 with located in the middle the cylindrical tank of aerobic reactor 2. The aerobic reactor 2 is at the bottom of the anaerobic reactor 1. Sewage is inserted (usually influenced by gravity) into the initial zone 3 of the anaerobic reactor 1 through the input 4 and is initially broken on plate 5. In the zone 3 of the anaerobic reactor 1 there are mechanical treatment processes, mainly sedimentation and separation of solids on the rough grille 6. Next, sewage flow by gravity to the initially clarifying zone 3b of the reactor, separated from the other zones by the wall 7. As shown in fig. 3 in the wall 7 there are units of clarifying siphons 8 connected with air flotation units 9. Thanks to flotation units 9 parts of lower density than water (eg fats) are broken by the air stream and effectively lifted upwards (flotate). In this zone 3b of the anaerobic reactor 1 there is a clear separation of raw sewage into parts: lower - sedimentary, middle - clarified, the upper - in the form of particles lighter than water and so-called scum. As shown, the process of clarification is aided by the device that combines a siphon separation system with the effect of breaking of fats and other parts lighter than water through a stream of air flowing through the device.

Then sewage, thanks to placing the input in siphons 8 at a suitable height, flow from the zone 3b (initially clarified) by siphons 8 upwards to the level of separating ridges 10, which also stop rising suspension. After passing through the ridges 10 pollution run as cascade to the second zone 11 of the anaerobic reactor 1, which acts as a retention buffer (with a third zone 12) and adopts the impulse of discharge of sewage occurring for example during the day. In the zone 11 there is further clarification of the solution of sewage and its gravity flow into the third zone 12 through the siphons 13 located on the compartment 14, that divides the second zone 11 from the third zone 12 of the anaerobic reactor 1. From the third zone 12 almost completely clarified sewage is taken regularly by air lift 15 (a mammoth pump) to the aerobic reactor 2. Thanks to this it is achieved the effect of averaging of the pollutant load given to the aerobic reactor 2, which can work in optimal conditions, stable quantity conditions. The total volume of the three zones 3, 11 and 12 of the anaerobic reactor 1 provides a sufficiently long residence time of sewage in the anaerobic zone, needed to complete the first phase of methane fermentation, which is the hydrolysis of complex organic compounds (proteins, amino acids, lipids, carbohydrates) into simpler forms (alcohols, higher fatty acids, simple sugars). This is necessary to obtain easily assimilated carbon compounds needed for the occurrence of subsequent aerobic biological sewage treatment processes.

The aerobic reactor 2 located inside the anaerobic reactor 1 operates on the basis of biological processes in trickle-type deposits. It is also possible to use the technology of an active sludge or combination of deposit and sludge.

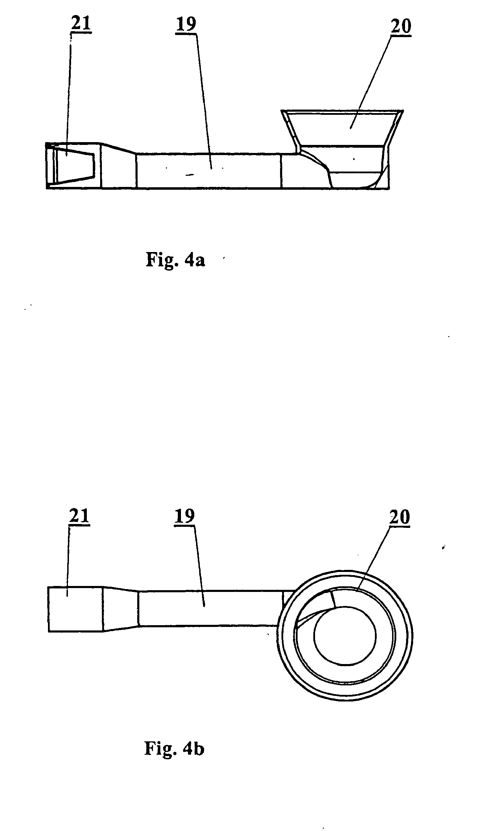

Clarified sewage through the injection system is taken by the vertical main pipe 16 to the bottom part of the aerobic reactor 2, which acts as a settling tank and anoxic zone. At the end of dosing cycle sewage is led by a rotary pump 17 through the discharge pipe 18 to the top part of the aerobic reactor 2. There, by a system of horizontal pipes 19 sewage flows to cyclone sprinklers 20, while the pipe 19 can be fixed or rotary (depending on system size). As shown in fig. 4, on the pipes 19 before the cyclone sprinkler nozzles 20 are located injector nozzles 21, which at the time of the flow of the sewage in the inner pipe suck the air through circumferentially spaced holes in the outer pipe and also aerate the flowing load. So prepared emulsion of air and sewage drops in rotary motion on the deposit 22, made of plastic. The stream of sewage flowing to the deposit 22 is thoroughly broken thanks to the sprinkler system combining a cyclone and injector effect. The same sprinkler system provides increased surface of exchange phase liquid - gas, an even hydration of the surface of the deposit maintaining adequate hydraulic load and prevents build-up of nozzles with biological membrane. Under the biological deposit 22 is a secondary settling tank 23 and a pipe 24 leading treated sewage outside. The sludge from the secondary settling tank 23 is transported by a pipe 25 to the initial zone 3a. The deposit 22 is aerated mechanically by a spiral diffuser 26 located under the deposit 22.

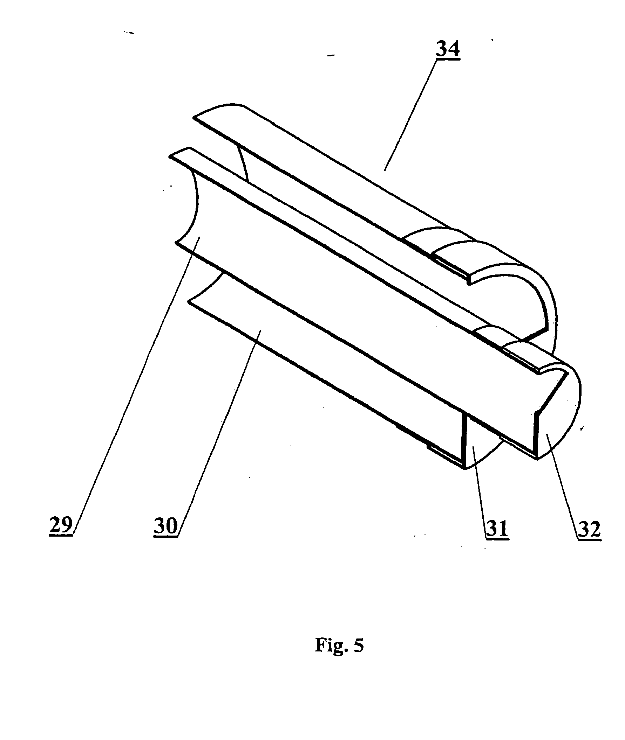

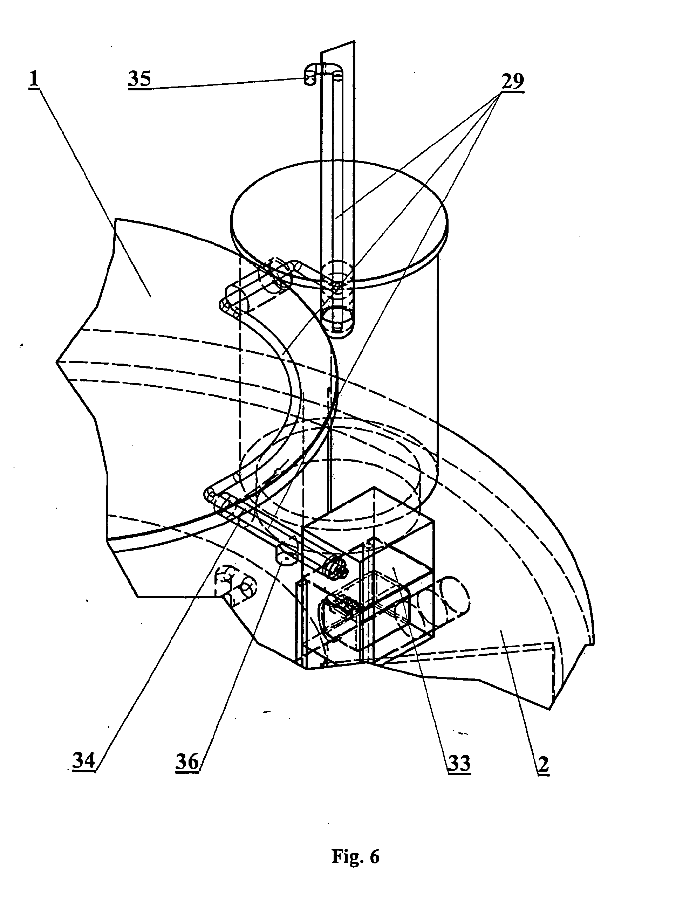

Biological aerobic and anaerobic processes occurring during treatment of sewage with carbon-containing compounds are exothermic. In the sewage treatment plant according to the invention the generated heat is used. This is a further advantage of the developed solution - it is the possibility of heating or cooling in the blender 34 of technological air for example taken by a pipe 27 to the flotation units 9 and by a pipe 28 to the diffuser 26, thanks to the use of high capacity and thermal stability of the reactor (sucking pipes pass through the interior of the reactor) . As shown in fig. 5 in the blender 34, the outside air is transported by the inner pipe 29 and the warm air from inside of the aerobic reactor 2 is transported by the outer pipe 30, surrounding the pipe 29 with the outside air. To adjust the ratio of warm to cold air is the orifice 31 and 32 located on the pipes 29 and 30 at the input to the chamber 33 of the blower of technological air. As shown in fig. 6, the cold air is sucked with the external air intake 35 through a pipe 29 and is introduced into the chamber 33 of the blower. Warm air is sucked from the interior of the aerobic reactor 2 and is introduced into the chamber 33 of the blower by the outer tube 30 surrounding the tube 29 with cold air. Warm air is mixed with cold in the chamber 33 of the blower as apportioned by the setting of orifices 31 and 32 on pipes 29 and 30. There is no need to use electric heaters to heat the technological air. Introduced into the chamber 33 air is dehumidified in the condenser 36 located on the blender 34.

The developed system primarily guarantees high isolation from the environment (adiabaticity). This is achieved by placing the entire treatment technology in the cylindrical or rectangular reactors according to the principle of one in the other. Using a material with high thermal resistance for the construction of the external tank, eg on the basis of a sandwich type wall, consisting of an outer isolating layer in the form of slates from foamed PVC, polyurethane or polystyrene, and the inner structural layer in the form of reinforced concrete or reticular-concrete mixed with granules of polyurethane or polystyrene. Selection of the degree of isolation depends on the climate zones in which is located the reactor. By placing the aerobic reactor 2 in the bath of raw sewage, having as an aqueous solution a high heat capacity, it is possible to maintain a constant temperature of the aerobic reactor 2.In turn, a protection against overheating of the system is obtained by using the above-listed construction solutions and, respectively placed ground layer on top of the aerobic reactor 2.

## Claims

1. Adiabatic, mechanical-biological sewage treatment plant, with the degree of biological and mechanical purification, using biological deposits or active sludge or both sludge and deposits, including biological, with anaerobic reactor chamber and the chamber of aerobic reactor, while the chamber of the aerobic reactor is placed inside the anaerobic reactor chamber in such a way that contained in the anaerobic chamber sewage, treated mechanically on the mechanical degree of treatment and then in the process of anaerobic treatment, surround the entire circumference of the aerobic reactor chamber, **characterized in that** the anaerobic reactor chamber (1) provides three-zones settling tank, the first zone of which is composed of two parts, where the first part of the first zone, the zone of initial clarifying (3a) is collects mechanically treated sewage from the grille and from the second part of the first zone (3b), from the second zone (11), which is a retention buffer, separated from the initially clarifying zone (3b) by the wall (7), in which there are siphon units (8) with flotation units (9) and from the third zone (12), separated from the second zone (11) by the compartment (14) the overflow siphons (13) to transport sewage from the retention buffer (11) to the third zone (12), which is connected preferably by the liquid air-lift (15) with the aerobic reactor tank (2), in which over the biological deposit (22) there is a sprinkler (20), preferably a cyclone, with under the biological deposit (22) is a secondary secondary settling tank (23) and a pipe (24) taking outside the treated sewage.

2. Adiabatic, mechanical-biological sewage treatment plant according to claim. 1, **characterized in that** flotation units (9) are placed in the pipe of the clarifying siphon (8) located in the clarifying zone (3b) of the anaerobic reactor (1).

3. Adiabatic, mechanical-biological sewage treatment plant according to claim. 1, **characterized in that** the sprinkler (20) is combined with injector nozzles (21), which are placed on the pipeline (19) supplying sewage to the sprinklers (20).

4. Adiabatic, mechanical-biological sewage treatment plant according to claim. I, **characterized in that** in the chamber (33) of the blower of technological air there is a blender (34) mixing warm internal air with cold outside air, while the outside air is brought into the chamber (33) of blower by the inner tube (29) from the intake (35), and the warm air to the aerobic reactor (2) is brought into the chamber (33) of the blower by the outer pipe (30), while in the blender (34) pipes (29) and (30) have at the input to the chamber (33) the control orifices ( 31) and (32), to regulate the amounts of warm and cold air.

5. Adiabatic, mechanical-biological sewage treatment plant according to claim. 4, **characterized in that** in the blender (34) there is a condenser (36) for drying air entering the chamber (33) of the blower of technological air.
